# EUROPEAN PATENT SPECIFICATION

(11) **EP 3 225 515 B1**
(45) Date of publication and mention of the grant of the patent: **11.09.2019**
(21) Application number: 16873261.8
(22) Date of filing: 25.11.2016
(51) Int. Cl.: B62H 5/00, E05B 71/00, B62H 3/08

(54) **LOCKING DEVICE AND BICYCLE STORING DEVICE HAVING SAME**
VERRIEGELUNGSVORRICHTUNG UND FAHRRADAUFBEWAHRUNGSVORRICHTUNG DAMIT
DISPOSITIF DE VERROUILLAGE ET DISPOSITIF DE STOCKAGE DE BICYCLETTE COMPORTANT CELUI-CI

(30) Priority: 07.12.2015 KR 20150173423
(43) Date of publication of application: 04.10.2017
(73) Proprietor: Seoheong Bicyclerack Co.,Ltd., Gimpo-si, Gyeonggi-do 10040 (KR)
(72) Inventor: PARK, Heungil, Gimpo-si Gyeonggi-do 10125 (KR)
(74) Representative: Zardi, Marco
(86) International application number: PCT/KR2016/013707
(87) International publication number: WO 2017/099396

(56) References cited:
- EP-A1- 1 397 285
- EP-A1- 2 460 715
- JP-A- 2006 009 346
- JP-A- 2006 137 311
- JP-A- 2015 160 503
- JP-A- 2015 160 503
- KR-A- 20150 048 556
- KR-B1- 101 255 595
- KR-Y1- 200 276 450

## Description

### BACKGROUND

### Field of the Present Disclosure

The present disclosure relates to a locking device and a bicycle holding apparatus having the locking device.

### Discussion of Related Art

In recent years, the number of users using the bicycle has increased. Especially, in urban areas, many people use bicycles as means for replacing public transportation.

In this regard, bicycle storage is difficult due to many reasons such as place restrictions or theft concerns.

In the case of a bicycle storage facility near the subway or government office, the facility is embodied as a simple structure configured such that steel sub-frames are welded each other to realize a vertical frame built up vertically, and a tent roof is built on a top of the vertical frame. Therefore, it is difficult to reliably manage the bicycle using the structure. Thus, there is a limitation in safely storing the bicycle while preventing it from being stolen.

### <Prior Art Document>

### <Patent Document>

Patent Document 1: Korean Patent Number No. 10-1124198 (2012.02.29)
Patent Document 2: Korean Patent Number No. 10-1371132 (2014.02.28)

JP2006137311 discloses a wheel lock device having a framework member having opposite two vertical parts, lock arms arranged between the vertical parts to lock the wheel, a support shaft and the other support shaft for supporting the lock arms in the vertical parts freely to swing and formed possible to be fitted/removed to/from the framework member by pushing or drawing, and a motor for swinging the lock arms around the support shaft and the other support shaft. EP1397285 discloses wall-mounted holder. EP2460715 A1 discloses bicycle parking apparatus comprising: a rotational driving member providing driving power; a rotating storage unit consisting of multiple levels, rotated by the driving power from the rotational driving member, and partitioned so as to store bicycles in a radial configuration; and an elevating unit. JP 2015 160503 A discloses a wheel locking device of the household bicycle parking machine including: a device body where a wheel entry space enabling entry of a bicycle wheel is formed; a pair of left and right swing stopper arms turnably mounted to the device body, and projecting into the wheel entry space of the device body to lock the wheel of the bicycle having entered the wheel entry space.

### SUMMARY OF THE PRESENT DISCLOSURE

### Technical Purposes

The present disclosure has been made in order to solve the problem of the prior art described above. Thus, it is an object of the present disclosure to provide a locking device capable of easily and conveniently storing an object such as a bicycle, and a bicycle holding apparatus having the locking device.

### Technical solutions

In a first aspect of the present disclosure, there is provided a locking device configured to fix and lock an object having an empty space defined therein, wherein the device comprises: a fixing assembly configured to pivot via a load of an object to fix the object; and a locking assembly configured to control a locked or unlocked state of the fixing assembly via a user input operation, wherein the locking assembly includes a locking insert.

In one implementation of the first aspect, the fixing assembly comprises: first and second spaced-apart brackets; first and second pivoting portions pivotally coupled to the first and second brackets respectively; first and second pivoting-driving portions integrally formed to lower ends of the first and second pivoting portions respectively, wherein when the first and second pivoting-driving portions are pivoted downwardly via a load of the object, the first and second pivoting portions are pivotally moved such that upper ends thereof are closer to each other, wherein the first and second pivoting-driving portions have first and second insert-receiving portions integrally formed to the first and second pivoting-driving portions respectively at lower ends thereof, wherein the first and second insert-receiving portions have first and second through-holes defined therein respectively, wherein when the first and second pivoting-driving portions are fully pivoted downwardly, the locking insert horizontally passes through the first and second through-holes; and first and second position-fixing portions extending inwardly from the upper ends of the first and second pivoting portions respectively, wherein when the first and second pivoting portions are fully pivotally moved such that upper ends thereof are fully close to each other, the first and second position-fixing portions are inserted into the empty spaced defined in the object, thereby to fix a position of the object.

In one implementation of the first aspect, when the locking insert horizontally passes through the first and second through-holes, the fixing assembly is in a locked state.

In a second aspect of the present disclosure, there is provided a bicycle holding apparatus comprising: a main support supported on a ground and having a predetermined height; a bicycle-support frame having one end supported on the main support and the other end supported on the ground, wherein the bicycle-support frame has an elongate slot defined therein to receive a front wheel and a rear wheel of the bicycle; and the locking device of the first aspect, wherein the locking device is disposed on the bicycle-support frame, wherein the object is the rear wheel of the bicycle, wherein the locking device is configured to fix and lock the rear wheel to the bicycle-support frame.

In one implementation of the second aspect, the first and second pivoting portions are pivotably mounted on both sides of the bicycle-support frame respectively, wherein when the rear wheel is seated on the first and second pivoting-driving portions located in the slot defined in the bicycle-support frame, each of the first and second pivoting-driving portions is pivotally and downwardly moved out of the slot through a cut portion defined in a bottom plate of the bicycle-support frame via a weight of the rear wheel, thereby to enable the upper ends of the first and second pivoting portions to be fully close to each other, wherein when the upper ends of the first and second pivoting portions are fully close to each other, the first and second position-fixing portions are inserted into an empty spaced defined between spokes of the rear wheel, thereby to fix the rear wheel to the bicycle-support frame, wherein when the first and second insert-receiving portions are pivotally and downwardly moved out of the slot through the cut portion defined in the bottom plate of the bicycle-support frame, the locking insert horizontally passes through the first and second through-holes defined in the first and second insert-receiving portions respectively, thereby to enable the fixing assembly to be in a locked state.

In one implementation of the second aspect, the locking device further comprises first and second returning units, wherein each of the first and second returning units is disposed between each of the first and second pivoting portions and the bicycle-support frame, wherein each of the first and second returning units has one end supported on each of the first and second pivoting portions and the other end supported on the bicycle-support frame, wherein the rear wheel is removed from the first and second pivoting-driving portions, each of the first and second returning units enables the fixing assembly to return to its original position via elasticity of each returning unit, thereby causing the first and second position-fixing portions to be separated from the space defined between the spokes of the wheel.

In one implementation of the second aspect, the bicycle holding apparatus further comprises a rail supported on an upper portion of the main support; and a pivoting-guide unit configured to slide on the rail, wherein the bicycle-support frame includes a lower bicycle-support frame supported on a lower portion of the main support, and an upper bicycle-support frame supported on the upper portion of the main support via the rail, wherein the upper bicycle-support frame is slidably received in the rail, wherein the pivoting-guide unit is pivotally coupled to the upper bicycle-support frame, wherein the pivoting-guide unit has spaced-apart first vertical plates, wherein each first vertical plate has a curve-shaped pivoting-guide hole, wherein the upper bicycle-support frame has spaced-apart second vertical plates, wherein each of the second vertical plates has a pivoting-guide protrusion on an outer face thereof, wherein each pivoting-guide protrusion moves in and along each curve-shaped pivoting-guide hole to guide the pivoting movement of the upper bicycle-support frame.

### Effects of the present disclosure

In accordance with the present disclosure, the combination of the fixing assembly and the locking assembly allows the bicycle to be secured and locked to the bicycle-support frame. Therefore, the bicycle may be stably stored and the stored bicycle may be prevented from being stolen.

Each returning unit can also cause the fixing assembly to automatically return to its original position when the bicycle wheel is unloaded from the fixing assembly. Therefore, the user can easily take away the bicycle from the bicycle holding apparatus.

A stack of the lower bicycle-support frame and the upper bicycle-support frame allows the bicycles to be stored in multiple stages. Therefore, the space occupied by the bicycle and the bicycle holding apparatus can be minimized.

### BRIEF DESCRIPTION OF THE DRAWINGS

FIG. 1 is a front perspective view of a locking device according to the present disclosure.
FIG. 2 is a rear perspective view showing the locking device of FIG. 1.
FIG. 3 is a perspective view illustrating an operating state of the locking device according to the present disclosure.
FIG. 4 is a perspective view illustrating a bicycle holding apparatus according to the present disclosure.
FIG. 5 is a perspective view showing a combined state between an upper bicycle-support frame and a rail for the bicycle holding apparatus according to the present disclosure.
FIG. 6 is a perspective view illustrating a separated state between an upper bicycle-support frame and a rail for the bicycle holding apparatus according to the present disclosure.
FIG. 7 is a side elevation view showing an operation of an upper bicycle-support frame for the bicycle holding apparatus according to the present disclosure.
FIG. 8A and FIG. 8B are respectively perspective and front views showing a state prior to an operation of a fixing assembly and a locking assembly for a locking device applied to a bicycle holding apparatus according to the present disclosure.
FIG. 9A and FIG. 9B are respectively perspective and front views showing a state in an operation of a fixing assembly and a locking assembly for a locking device applied to a bicycle holding apparatus according to the present disclosure.

### DETAILED DESCRIPTIONS

Hereinafter, embodiments of the present disclosure will be described in detail with reference to the accompanying drawings so that those skilled in the art can easily carry out the present disclosure. The present disclosure may, however, be embodied in many different forms and should not be construed as limited to the embodiments set forth herein. Throughout the description and drawings, like reference numerals are assigned to like elements.

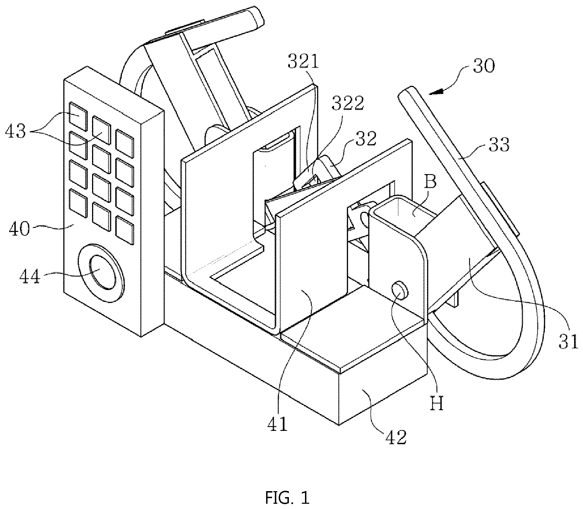

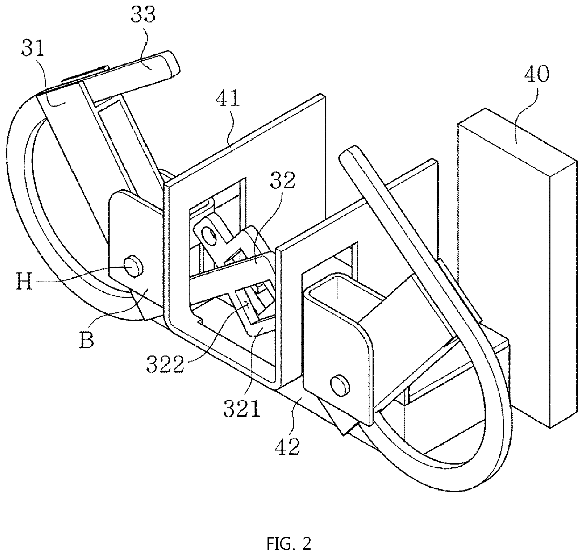

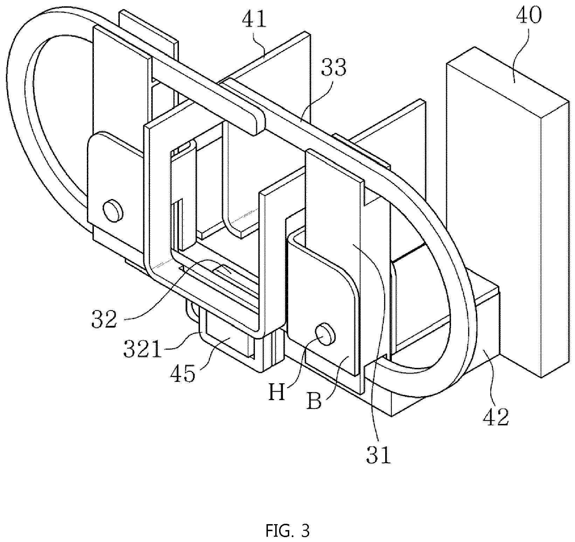

FIG. 1 is a front perspective view of a locking device according to the present disclosure. FIG. 2 is a rear perspective view showing the locking device of FIG. 1. FIG. 3 is a perspective view illustrating an operating state of the locking device according to the present disclosure.

As shown in FIG. 1 to FIG. 3, the locking device according to the disclosure comprises a fixing assembly 30 and a locking assembly 40.

The fixing assembly 30 may be pivoted by a load of an object to be fixed and locked by the locking device. The fixing assembly 30 may be inserted into an empty space formed in the object. Thus, the fixing assembly 30 may be configured to fix the object thereto to prevent theft thereof. The fixing assembly 30 includes first and second brackets B, first and second pivoting portions 31, a first and second pivoting-driving portions 32, and first and second position-fixing portions 33.

In this connection, the object may be a front wheel 91 of a bicycle 90 or a rear wheel 92 thereof, and the empty space may be defined between spokes 911 and 921 disposed on the front wheel 91 or the rear wheel 92 of the bicycle 90.

The first and second brackets B are configured to respectively guide the pivoting of the first and second pivoting portions 31 as described below. The first and second brackets B may be positioned around the object.

That is, the first and second brackets B may face each other while the object is interposed therebetween.

These first and second brackets B form one set and are spaced from one another. Between the first and second brackets B, a portion of each of the first and second pivoting portions 31 is received. Each of the brackets B has parallel front and rear plates spaced apart from one another.

The pivoting of the first and second pivoting portions 31 leads to the pivoting of the first and second position-fixing portions 33 respectively. Each of the first and second pivoting portions 31 is received between the spaced parallel front and rear plates of each of the brackets B. Each hinge H is connected to and between the parallel spaced-apart front and rear plates of each of the brackets B. Each of the first and second pivoting portions 31 pivots about the respective hinge H.

That is, each of the first and second pivoting portions 31 may be pivotable in a direction toward or away from the object.

The first and second pivoting-driving portions 32 drive the pivoting of the first and second pivoting portions 31 respectively. Via this pivoting motion, the first and second position-fixing portions 33 may fix the object. The first and second pivoting-driving portions 32 extends horizontally from lower ends of the first and second pivoting portions 31 respectively.

That is, each of the first and second pivoting-driving portions 32 is disposed in contact with a lower end of the object.

The first and second pivoting-driving portions 32 and the first and second pivoting portions 31 are integrally formed respectively and thus pivoted together.

In this connection, the first and second pivoting portions 31 are positioned around the object while extending in a diagonal direction. Thus, when the first and second pivoting portions 31 pivot inward, the first and second pivoting portions 31 move in a direction toward each other.

Each of the first and second pivoting portions 31 may be tilted via each returning unit 50 as described below. The first and second pivoting-driving portions 32 may also be present at an upward tilted manner.

That is, when the object is seated in the first and second pivoting-driving portions 32, the first and second pivoting-driving portions 32 are pivoted downward by the load of the object. Thus, the first and second pivoting portions 31 are pivoted in a direction toward each other, that is, toward the object.

Additionally, each of the first and second pivoting-driving portions 32 has each of first and second insert-receiving portions 321 formed integrally therewith at its lower end. A locking insert 45 of the locking assembly 40 as described below may pass through the first and second insert-receiving portions 321.

In this connection, the first and second insert-receiving portions 321 have first and second through-holes 322 defined therein respectively. The locking insert 45 passes horizontally through the first and second through-holes 322.

When the first and second pivoting-driving portions 32 are pivoted in the downward direction, the first and second insert-receiving portions 321 overlap with each other in the horizontal direction. As a result, the first and second through-holes 322 are also superimposed with each other in the horizontal direction.

The first and second position-fixing portions 33 are configured to fix the object. The first and second position-fixing portions 33 extend in the horizontal direction from upper ends of the first and second pivoting portions 31 respectively.

Each of the first and second position-fixing portions 33 is integrally formed with each of the first and second pivoting-driving portions 32. Thus, each of the first and second position-fixing portions 33 is pivoted together with each of the first and second pivoting-driving portions 32.

When the object is seated on the first and second pivoting-driving portions 32, and, thus, the first and second pivoting-driving portions 32 together with the first and second insert-receiving portions 321 are pivoted in the downward direction via the load of the object, the first and second position-fixing portions 33 are inserted into the empty space formed in the object, thereby to fix the object.

When the first and second pivoting-driving portions 32 together with the first and second insert-receiving portions 321 are fully pivoted in the downward direction via the load of the object, the first and second insert-receiving portions 321 overlap with each other in the horizontal direction, and, as a result, the first and second through-holes 322 are also superimposed with each other in the horizontal direction. Thus, the locking insert 45 of the locking assembly 40 may be inserted into the first and second insert-receiving portions 321. Thus, the first and second position-fixing portions 33 may be locked.

When the object is removed from the first and second pivoting-driving portions 32, each returning unit 50 returns the fixing assembly 30 to its original position via its own elasticity.

The returning units 50 will be described in detail with reference to the bicycle holding apparatus as described later.

The locking assembly 40 may be configured to control the fixation of the fixing assembly 30. The locking assembly 40 may include a bracket 41 coupled to the first and second brackets B.

In this connection, the bracket 41 may be formed in a shape conforming to a shape of a support frame of the bicycle holding apparatus described later. The shape may vary depending on the shape of the object.

The locking assembly 40 further includes a housing 42 having one side face mounted to the bracket 41.

As shown in FIG. 3, a rear side face of the housing 42 faces the first and second insert-receiving portions 321 fully pivoted in the downward direction.

In a portion of the housing 42 facing the first and second insert-receiving portions 321 fully pivoted in the downward direction, a locking insert passing-hole 421 is formed therein. Accordingly, while the locking insert 45 is embedded in the housing 42, the locking insert 45 may be drawn out of the housing 42 or introduced into the housing 42 through the locking insert passing-hole 421.

When the locking insert 45 is pulled out of the housing 42, the locking insert 45 sequentially passes the first and second through-holes 322 formed in the first and second insert-receiving portions 321. Thus, the locking insert 45 locks the fixing assembly 30.

When the locking insert 45 is retracted into the housing 42, the locking of the fixing assembly 30 is released.

The locking assembly 40 may be operated in the same manner as well-known door locks.

In this connection, the above object is not limited to the front wheel or rear wheel of the bicycle. The object may be an object having a structure similar to a front wheel or a rear wheel of the bicycle, that is, an object having an empty space into which the position-fixing portions can be inserted.

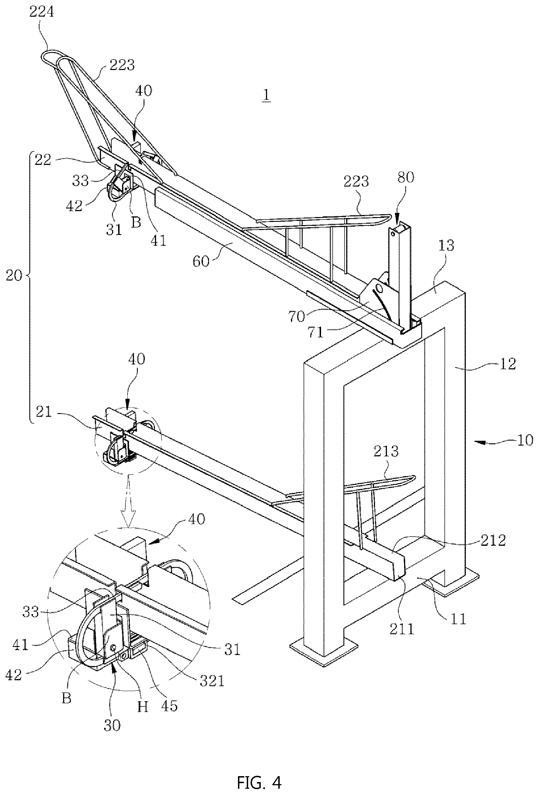

Next, referring to FIGS. 4 to 9, a bicycle holding apparatus having the locking device according to the present disclosure will be described.

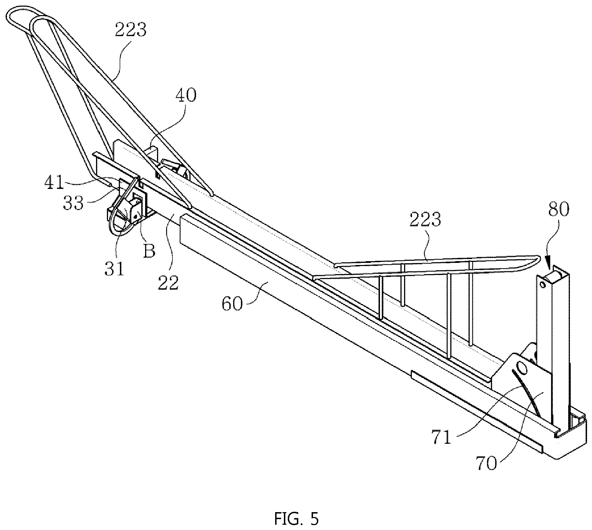

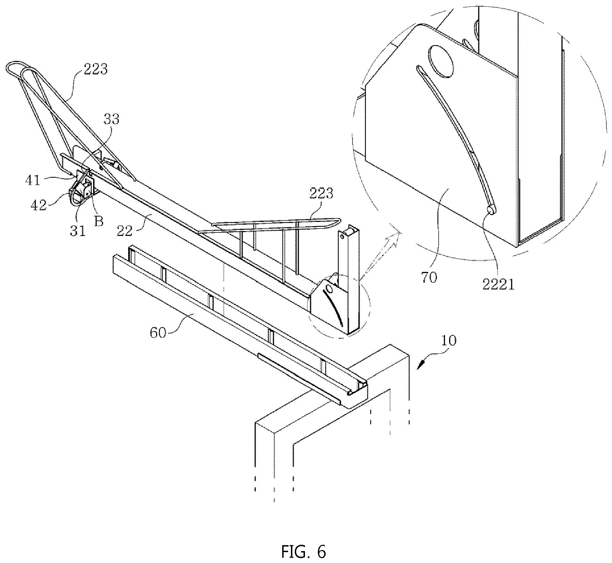

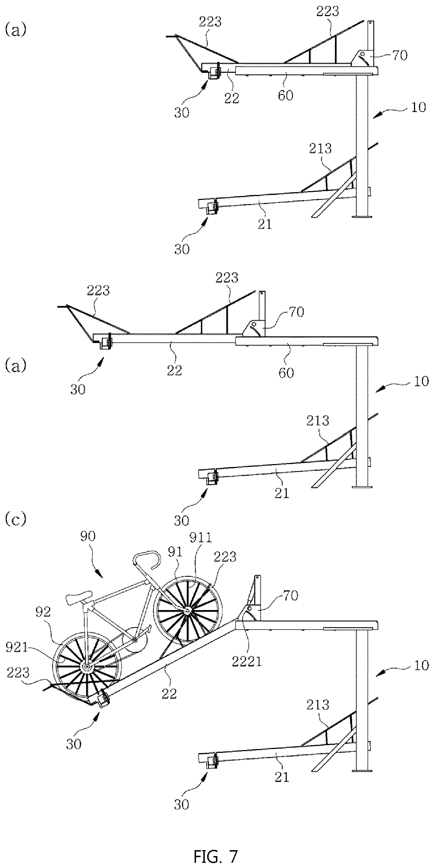

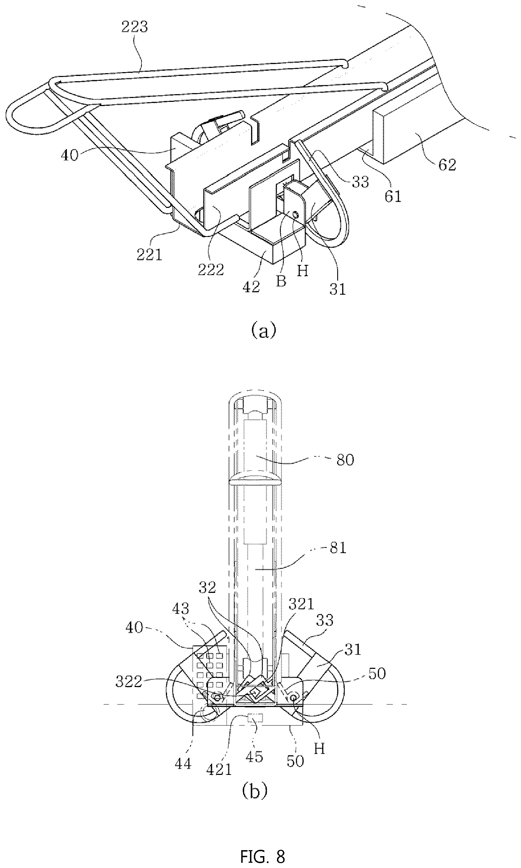

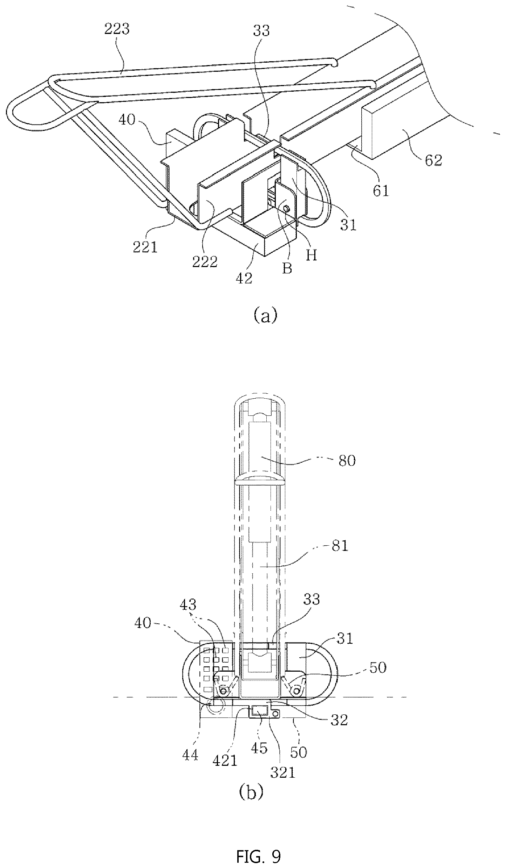

FIG. 4 is a perspective view illustrating a bicycle holding apparatus according to the present disclosure. FIG. 5 is a perspective view showing a combined state between an upper bicycle-support frame and an upper rail for the bicycle holding apparatus according to the present disclosure. FIG. 6 is a perspective view illustrating a separated state between an upper bicycle-support frame and an upper rail for the bicycle holding apparatus according to the present disclosure. FIG. 7 is a side elevation view showing an operation of an upper bicycle-support frame for the bicycle holding apparatus according to the present disclosure. FIG. 8A and FIG. 8B are respectively perspective and front views showing a state prior to an operation of a fixing assembly and a locking assembly for a locking device applied to a bicycle holding apparatus according to the present disclosure. FIG. 9A and FIG. 9B are respectively perspective and front views showing a state in an operation of a fixing assembly and a locking assembly for a locking device applied to a bicycle holding apparatus according to the present disclosure.

Referring to FIG. 4 to FIG. 9, the bicycle holding apparatus 1 according to the present disclosure includes a main support 10, a bicycle-support frame 20, and a locking device as described above.

The main support 10 supports the bicycle 90 together with the bicycle-support frame 20 as described later. The main support 10 include a lower horizontal main frame 11, first and second vertical main frames 12 extending vertically from opposing both sides of the lower horizontal main frame 11, and an upper horizontal main frame 13 connecting top ends of the first and second vertical main frames 12.

The lower horizontal main frame 11 supports the lower bicycle-support frame 21 described later. The lower horizontal main frame 11 may be fixed to the ground via a fastener (not shown) such as an anchor bolt.

The first and second vertical main frames 12 serve to support a load of the bicycle 90 secured to the upper bicycle-support frame 22 and a load of the upper bicycle-support frame 22, which will be described later. The first and second vertical main frames 12 are bolted or welded to the sides of the lower horizontal main frame 11. Thus, the main support 10 has a constant height.

In this connection, the first and second vertical main frames 12 are separated from each other by the length of the lower horizontal main frame 11. The length of the lower horizontal main frame 11, the length of the upper horizontal main frame 13, and the numbers of and a spacing between the first and second vertical main frames 12 may vary depending on the number of bicycles 90 to be mounted.

The upper horizontal main frame 13 connects the first and second vertical main frames 12 and supports the upper bicycle-support frame 22. The upper horizontal main frame 13 is bolted or welded to top faces of the first and second vertical main frames 12.

In this connection, the upper horizontal main frame 13 is formed to have a length equal to the length of the lower horizontal main frame 11.

The bicycle-support frame 20 is supported on the main support 10 as described above.

The bicycle-support frame 20 functions to support the bicycle 90. The bicycle-support frame 20 includes a lower bicycle-support frame 21 and an upper bicycle-support frame 22.

The lower bicycle-support frame 21 is configured to have a longer length than a length of a general bicycle 90 so that both the front wheel 91 and the rear wheel 92 of the bicycle 90 may be supported by the lower bicycle-support frame 21.

The lower bicycle-support frame 21 is bolted or welded, at a proximal end thereof, to the upper surface of the lower horizontal main frame 11. The lower bicycle-support frame 21 may be configured to partially receive the front wheel 91 and the rear wheel 92 of the bicycle 90. To this end, the lower bicycle-support frame 21 includes a bottom plate 211 and vertical side plates 212 extending vertically from both lateral edges of the bottom plate 211 respectively.

Based on the structure of the lower bicycle-support frame 21, the bottom plate 211 and the vertical side plates 212 together form a wheel receiving space in which the front wheel 91 and the rear wheel 92 of the bicycle 90 can be accommodated.

Along the bottom plate 211, a portion where the rear wheel 92 of the bicycle 90 is located is cut therefrom such that the fixing assembly 30 as described below is operated.

Along the vertical side plates 212, portions where the rear wheel 92 of the bicycle 90 is located are cut therefrom such that the first and second position-fixing portions 33 are operated.

First and second bicycle-stopping units 213 are provided on distal and proximal end portions of the lower bicycle-support frame 21 respectively to prevent the front wheel 91 and the rear wheel 92 of the bicycle 90 from being removed from the lower bicycle-support frame 21.

In this connection, the vertical side plates 212 may be formed along the longitudinal direction of the bottom plate 211. In an alternative, the vertical side plates 212 may be formed only in a front region where the front wheel 91 of the bicycle 90 is located and a rear region where the rear wheel 92 is located.

The upper bicycle-support frame 22 and the lower bicycle-support frame 21 allow two bicycle 90 to be mounted thereon in two stages. The upper bicycle-support frame 22 is supported on the upper horizontal main frame 13 via the rail 60.

The rail 60 serves to guide sliding of the upper bicycle-support frame 22. A proximal end of the rail 60 is bolted or welded to an upper surface of the upper horizontal main frame 13. The rail 60 includes a bottom plate 61 and vertical side plates 62 extending vertically from both lateral edges of the bottom plate 61 respectively.

In this connection, the rail 60 may extend parallel to the lower bicycle-support frame 21.

The rail 60 may be disposed so as not to be vertically overlapped with the lower bicycle-support frame 21 such that the bicycle 90 mounted on the lower bicycle-support frame 21 is not interfered with the bicycle 90 mounted on the upper bicycle-support frame 22.
Due to the structure of the rail 60, the bottom plate 61 and the vertical side plates 62 together form an elongate slot. In the elongate slot, the upper bicycle-support frame 22 and a pivoting-guide unit 70 as described later may be slidably received.

The upper bicycle-support frame 22 is formed to have a longer length than that of a general bicycle 90 so that both the front wheel 91 and the rear wheel 92 of the bicycle 90 can be accommodated in the upper bicycle-support frame 22. The upper bicycle-support frame 22 is formed to have a longer length than the rail 60. As a result, a portion of the upper bicycle-support frame 22 protrudes out of the rail 60.

The upper bicycle-support frame 22 may be configured to partially receive the front wheel 91 and the rear wheel 92 of the bicycle 90. To this end, the upper bicycle-support frame 22 includes a bottom plate 221 and vertical side plates 222 extending vertically from both lateral edges of the bottom plate 221 respectively.

While the upper bicycle-support frame 22 is received in the elongate slot of the rail 60, the bottom plate 221 of the upper bicycle-support frame 22 slides along the upper surface of the bottom plate 61 of the rail 60. At this time, the vertical side plates 222 slide along the inner surfaces of the vertical side plates 62 of the rail 60 respectively.

Along the bottom plate 221, a portion where the rear wheel 92 of the bicycle 90 is located is cut therefrom such that the fixing assembly 30 as described below is operated.

Along the vertical side plates 212, portions where the rear wheel 92 of the bicycle 90 is located are cut therefrom such that the first and second position-fixing portions 33 are operated.

First and second bicycle-stopping units 223 are provided on distal and proximal end portions of the upper bicycle-support frame 22 respectively to prevent the front wheel 91 and the rear wheel 92 of the bicycle 90 from being removed from the upper bicycle-support frame 22.

In this connection, on the upper surface of the bottom plate 61 of the rail 60 or on the bottom surface of the bottom plate 221 of the upper bicycle-support frame 22, rotatable rollers (not shown) may be arranged to be spaced apart at regular intervals. A handle 224 may be mounted at a distal end of a distal bicycle-stopping unit 223. Thus, the user may easily slide the upper bicycle-support frame 22.

In addition, the pivoting-guide unit 70 is accommodated in the rail 60. The pivoting-guide unit 70 allows easy pivoting of the upper bicycle-support frame 22.

The pivoting-guide unit 70 has a hollow space therein so that a proximal end portion of the upper bicycle-support frame 22 may be received therein.

The pivoting-guide unit 70 has curved pivoting-guide holes 71 respectively formed in both side plates thereof. Pivoting-guide protrusions 2221 protrude from outer faces of the vertical side plates 222 of the upper bicycle-support frame 22 respectively. Each pivoting-guide protrusion 2221 is movably received within each pivoting-guide hole 71.

Thus, when the user pulls or pushes the upper bicycle-support frame 22, the pivoting-guide unit 70 slides at the same time. At this time, due to the engagement between each pivoting-guide protrusion 2221 and each pivoting-guide hole 71, the upper bicycle-support frame 22 can be easily pivoted up and down without being removed from the rail 60.

In addition, rollers (not shown) may be installed on inner side faces of both side plates of the pivoting-guide unit 70 so that the upper bicycle-support frame 22 can slide smoothly along the rail 60.

In this connection, a stopper (not shown) for preventing the pivoting-guide unit 70 from being removed from the rail 60 may be installed on an inner face of the rail 60 or an outer face of the pivoting-guide unit 70.

A shock absorber 80 for allowing smooth pivoting of the upper bicycle-support frame 22 in the vertical direction may be installed on the pivoting-guide unit 70 and the upper bicycle-support frame 22. In this connection, the pivoting-guide unit 70 has a structure pivotally coupled to the shock absorber 80.

In this connection, the shock absorber 80 is pivotably mounted on the pivoting-guide unit 70. A rod 81 of the shock absorber 80 is installed on the upper bicycle-support frame 22.

Thus, the shock absorber 80 is pivoted together with the pivoting of the upper bicycle-support frame 22. The rod 81 is retracted into or withdrawn out of the pivoting-guide unit 70 in accordance with the pivoting of the upper bicycle-support frame 22 to allow easy pivoting of the upper bicycle-support frame 22. This allows the bicycle 90 to be stored in or withdrawn out of the bicycle holding apparatus.

In one embodiment, a plurality of lower bicycle-support frames 21 may be arranged to spaced apart from each other to be supported by the lower horizontal main frame 11. A plurality of upper bicycle-support frames 22 may be arranged to be spaced apart from each other to be supported by the upper horizontal main frame 13. As a result, a plurality of bicycles 90 may be stored in the bicycle holding apparatus.

Specifically, when the bicycle 90 is to be mounted on the upper bicycle-support frame 22, as shown in FIG. 7, the user pulls the handle 224 installed on the upper bicycle-support frame 22, whereby the upper bicycle-support frame 22 is drawn out of the rail 60. The upper bicycle-support frame 22 is then pivoted downward. In this process, the upper bicycle-support frame 22 can be smoothly pivoted via the pivoting-guide hole 71.

In this connection, the distal end of the bottom plate 61 of the rail 60 is cut. Thus, while the upper bicycle-support frame 22 is inclined downwardly, the upper bicycle-support frame 22 is drawn out of the rail 60.

After the upper bicycle-support frame 22 is fully pivoted downward, the front wheel 91 and the rear wheel 92 of the bicycle 90 sequentially move forward along the bottom plate 221 of the upper bicycle-support frame 22. When the front wheel 91 of the bicycle 90 and the rear wheel 92 are seated on the bottom plate 221 of the upper bicycle-support frame 22, the user grips the handle 224 and pivots the upper bicycle-support frame 22 upwards. As a result, the upper bicycle-support frame 22 is level with the rail 60. In this state, the user pushes the handle 224, thereby causing the upper bicycle-support frame 22 to slide forward along the rail 60. As a result, the bicycle 90 may be stored in the main support 10.

Meanwhile, the fixing assembly 30 prevents movement of the bicycle 90, which is stored in each of the lower bicycle-support frame 21 and the upper bicycle-support frame 22 and prevents the bicycle 90 from being turned over and/or stolen. The fixing assembly 30 includes the first and second brackets B, the first and second pivoting portions 31, the first and second pivoting-driving portions 32, and the first and second position-fixing portions 33.

In this connection, the fixing assembly 30 is installed only on a portion where the front wheel 91 of the bicycle 90 is positioned along each of the lower bicycle-support frame 21 and the upper bicycle-support frame 22. Accordingly, the fixing assembly 30 may fix the front wheel 91. In an alternative, the fixing assembly 30 is installed only on a portion where the real wheel 92 of the bicycle 90 is positioned along each of the lower bicycle-support frame 21 and the upper bicycle-support frame 22. Accordingly, the fixing assembly 30 may fix the rear wheel 92.

In another embodiment, a first fixing assembly 30 is installed only on a portion where the rear wheel 91 of the bicycle 90 is positioned along the upper bicycle-support frame 22. In this connection, a second fixing assembly 30 is installed only on a portion where the front wheel 91 of the bicycle 90 is positioned along the lower bicycle-support frame 21. In still another embodiment, a further fixing assembly 30 may be installed to the bicycle-stopping unit 213 installed on the lower bicycle-support frame 23.

Hereinafter, an example in which the fixing assembly 30 fixes only the rear wheel 92 of the bicycle 90 will be described.

The first and second brackets B are configured to respectively guide the pivoting of the first and second pivoting portions 31 as described below. The first and second brackets B are respectively installed to the bracket 41 of the locking assembly 40. The bracket 41 of the locking assembly 40 nay be mounted on the outer side faces of the both vertical side plates 212 and 222 of each of the lower and upper bicycle-support frames 21 and 22.

The first and second brackets B face the cut portion of the bottom plate 211 or 221 with the vertical side plates 212 or 222 being interposed between the first and second brackets B and the cut portion respectively.

These first and second brackets B form one set and are spaced from one another. Between the first and second brackets B, a portion of each of the first and second pivoting portions 31 is received. Each of the brackets B has parallel front and rear plates spaced apart from one another.

The pivoting of the first and second pivoting portions 31 leads to the pivoting of the first and second position-fixing portions 33 respectively. Each of the first and second pivoting portions 31 is received between the spaced parallel front and rear plates of each of the brackets B. Each hinge H is connected to and between the parallel spaced-apart front and rear plates of each of the brackets B. Each of the first and second pivoting portions 31 pivots about the respective hinge H.

That is, each of the first and second pivoting portions 31 may be pivotable in a direction toward or away from an empty space defined in each of the bicycle-support frames 21 and 22.

Each of the first and second pivoting portions 31 may be formed of a substantially rectangular plate. Each of the first and second pivoting portions 31 has a receiving groove (not shown) at each of portions thereof facing the vertical side plates 212 or 222. One end of each returning unit 50 as described later is received in each receiving groove.

Since one end of each returning unit 50 as described later is received in each receiving groove defined in each of the first and second pivoting portions 31, each returning unit 50 may be operated while each returning unit 50 is reliably stably mounted between each of the first and second pivoting portions 31 and each of the bicycle-support frames 21 or 22.

Each of the first and second pivoting portions 31 may be inclined such that the lower end of each of the first and second pivoting portions 31 is closer to the vertical side plates 212 or 222 than the upper end thereof due to the elastic force of each returning unit 50, as shown in FIG. 8B.

The first and second pivoting-driving portions 32 drive respectively the pivoting of the first and second pivoting portions 31. This pivoting causes the first and second position-fixing portions 33 to fix the rear wheel 92. The first and second pivoting-driving portions 32 extend horizontally from the lower ends of the first and second pivoting portions 31 respectively.

That is, each of the first and second pivoting-driving portions 32 extends along the cut portion of the bottom plate 211 or 221. Each of the first and second pivoting-driving portions 32 contacts a bottom of the wheel of the bicycle, which is accommodated in the empty space or slot formed by the bottom plate and vertical side plates of each of the lower and upper bicycle-support frames 21 and 22.

The first and second pivoting-driving portions 32 and the first and second pivoting portions 31 are integrally formed respectively and thus pivoted together.

In this connection, the first and second pivoting portions 31 are symmetrically positioned around each of the lower and upper bicycle-support frames 21 and 22 while extending in a diagonal direction. Thus, when the first and second pivoting portions 31 pivot inward, the first and second pivoting portions 31 move in a direction toward each other.

Each of the first and second pivoting portions 31 may be tilted via each returning unit 50 as described above. Thus, the first and second pivoting-driving portions 32 may also be present at an upward tilted manner.

That is, a portion of each of the first and second pivoting-driving portions 32 passes through the cut-out portion of each of the bottom plates 211 and 221 and is placed in the empty space defined by each of the bottom plates 211 and 221 and the vertical side plates 212 or 222. In this connection, the rear wheel 92 is seated on the portion of each of the first and second pivoting-driving portions 32.

As shown in FIG. 9B, each of the first and second pivoting-driving portions 32 passes through the cut portion of each of the bottom plates 211 and 221 via the load of the seated rear wheel 92 and then is withdrawn out of the empty spaces defined by each of the bottom plates 211 and 221 and the vertical side plates 212 or 222. In this case, the upper ends of the first and second pivoting portions 31 are pivoted in a direction approaching each other, that is, in a direction approaching the vertical side plates 212 or 222.

Additionally, each of the first and second pivoting-driving portions 32 has each of the first and second insert-receiving portions 321 formed integrally therewith at its lower end. The locking insert 45 of the locking assembly 40 as described above may pass through the first and second insert-receiving portions 321.

In this connection, the first and second insert-receiving portions 321 have the first and second through-holes 322 defined therein respectively. The locking insert 45 passes horizontally through the first and second through-holes 322.

When the first and second pivoting-driving portions 32 are pivoted in the downward direction, the first and second insert-receiving portions 321 overlap with each other in the horizontal direction. As a result, the first and second through-holes 322 are also superimposed with each other in the horizontal direction. Then, when the locking insert 45 passes horizontally through the first and second through-holes 322, the rear wheel 92 may be fixed to each of the bicycle-support frames 21 and 22.

Each of the first and second position-fixing portions 33 is integrally formed with each of the first and second pivoting-driving portions 32. Thus, each of the first and second position-fixing portions 33 is pivoted together with each of the first and second pivoting-driving portions 32.

In other words, when the rear wheel 92 is seated on the upper surfaces of the first and second pivoting-driving portions 32, each of the first and second pivoting-driving portions 32 passes through the cut portion of each of the bottom plates 211 and 221 via the load of the seated rear wheel 92 and then is withdrawn out of the empty spaces defined by each of the bottom plates 211 and 221 and the vertical side plates 212 or 222. Thus, the upper ends of the first and second pivoting portions 31 are pivoted in a direction approaching each other, that is, in a direction approaching the vertical side plates 212 or 222. Thus, each of the first and second position-fixing portions 33 passes through each of cut portions in the vertical side plates 212 or 222 and are inserted into the empty space defined between the spokes 921 disposed on the rear wheel 92. Thus, forward or reverse rotation of the rear wheel 92 is limited while upward or downward movement of the wheel 92 is prevented.

The locking insert 45 of the locking assembly 40 may pass through the first and second insert-receiving portions 321 located below each of the bottom plates 211 and 221. Thus, the first and second position-fixing portions 33 may keep the state at which the rear wheel 92 is fixed.

Between each of the first and second pivoting portions 31 and the lower or upper bicycle-support frame 21 or 22, each returning unit 50 is further installed. When the load of the rear wheel 92 is released from each of the first and second pivoting-driving portions 32, each returning unit 50 returns the fixing assembly 30 to its original position via its elastic force.

The returning unit 50 may be embodied as a known torsion spring. The hinge H passes through a central hollow of the torsion spring 50 to fix the spring thereto.

One end of each returning unit 50 is received in each of receiving recesses formed in the first and second pivoting portions 31 and then is in contact with each of the first and second pivoting portions 31. The other end of each returning unit 50 is in contact with and supported by an outer face of the lower or upper bicycle-support frame 21 or 22.

In this connection, the lower or upper bicycle-support frame 21 or 22 has a receiving groove (not shown) defined in an outer face portion thereof. The other end of each returning unit 50 is received in each receiving groove. Thus, each returning unit 50 may be prevented from being removed from the lower or upper bicycle-support frame 21 or 22.

That is, since the other end of each returning unit 50 is received in each receiving groove defined in the lower or upper bicycle-support frame 21 or 22, each returning unit 50 may be operated while each returning unit 50 is stably mounted between each of the first and second pivoting portions 31 and the bicycle-support frame 21 or 22.

As shown in FIG. 9B, when the rear wheel 92 is seated on the top of each of the first and second pivoting-driving portions 32, each returning unit 50 is compressed between each of the first and second pivoting portions 31 and each of the vertical side plates 212 or 222 via the pivotal movement of each of the first and second pivoting portions 31. On the contrary, when the rear wheel 92 mounted on the first and second pivoting-driving portions 32 is lifted up, each returning unit 50 is restored to its original shape via its own elastic force. This causes each of the first and second pivoting portions 31 to return to its original position.

The locking assembly 40 is configured to control the fixation of the fixing assembly 30. The bracket 41 is installed on the outer side of each of the vertical side plates 212 or 222. The locking assembly 40 includes the bracket 41.

The locking assembly 40 further includes the housing 42 having one side face mounted to the bracket 41.

The housing 42 is spaced apart from the cut portion of the bottom plate 211 or 221 by a predetermined distance. One face of the housing 42 faces both the first and second insert-receiving portions 321 disposed below the bottom plate 211 or 221.

In a portion of the housing 42 facing both the first and second insert-receiving portions 321 fully pivoted in the downward direction, the locking insert passing-hole 421 is formed therein. Accordingly, while the locking insert 45 is embedded in the housing 42, the locking insert 45 may be drawn out of the housing 42 or introduced into the housing 42 through the locking insert passing-hole 421.

When the locking insert 45 is pulled out of the housing 42, the locking insert 45 sequentially passes the first and second through-holes 322 formed in the first and second insert-receiving portions 321. Thus, the locking insert 45 locks the fixing assembly 30.

When the locking insert 45 is retracted into the housing 42, the locking of the fixing assembly 30 is released.

Specifically, when the rear wheel 92 of the bicycle 90 is placed in the empty space defined in the lower bicycle-support frame 21 or the upper bicycle-support frame 22, the first and second pivoting-driving portions 32 are moved below the bottom plate 211 or 221 through the cut-out portion of the bottom plate 211 or 221 via the load of the rear wheel 92. Thus, the first and second insert-receiving portions 321 are superimposed horizontally with each other. Thereby, the first and second through-holes defined therein are superimposed with each other in the horizontal direction.

At the same time, each of the first and second pivoting portions 31 is pivoted toward each of the vertical side plates 212 or 222, and, thus, each of the first and second position-fixing portions 33 is pivoted and inserted in the space between the spokes 921 of the rear wheel 92.

In this connection, each returning unit 50 is compressed between each of the first and second pivoting portions 31 and each of the vertical side plates 212 or 222 via the pivotal movement of each of the first and second pivoting portions 31.

In this state, the user presses number buttons 43 on the locking assembly 40 and inputs a password. Then, a control unit (not shown) installed in the locking assembly 40 or inside the housing 42 thereof checks and stores the inputted numbers. The control unit then causes the locking insert 45 to be withdrawn out of the housing 42 and then to sequentially pass through the first and second through-holes formed in the first and second insert-receiving portions 321. Thus, the fixing assembly 30 is fixed.

In this way, the rear wheel 92 may not be separated from the lower bicycle-support frame 21 or the upper bicycle-support frame 22 via the first and second position-fixing portions 33. Thus, it is possible to prevent theft of the bicycle 90 from the bicycle holding apparatus 1 according to the present disclosure.

In this connection, the number buttons 43 on the locking assembly 40 may be have 0 to 9 number buttons. The number buttons 43 may further have # and * shaped buttons.

In addition, the number of digits of the password input to the locking assembly 40 may be 4 to 6. After inputting the password via the number buttons 43, when the * button or the # button is pressed, the control unit (not shown) may actuate the locking insert 45.

In this connection, the number of digits of the password input to the locking assembly 40 is not limited to four to six digits but may be changed to different numbers of digits by a designer.

In order to take the bicycle 90 held in the bicycle holding apparatus 1 according to the present disclosure, the user again enters the password inputted to the locking assembly 40 in order to enable the bicycle 90 to be fixed to the lower bicycle-support frame 21 or the upper bicycle-support frame 22.

When the new password is input as described above, the control unit (not shown) installed inside the locking assembly 40 or the housing 42 thereof determines whether the newly inputted password matches the password previously inputted to the locking assembly 40 in order to enable the bicycle 90 to be fixed to the lower bicycle-support frame 21 or the upper bicycle-support frame 22. Upon determination that the newly inputted password matches the password previously inputted to the locking assembly 40 in order to enable the bicycle 90 to be fixed to the lower bicycle-support frame 21 or the upper bicycle-support frame 22, the control unit enables the locking insert 45 to be removed from the first and second through-holes formed in the first and second insert-receiving portions 321 and to be introduced into the housing 42. This causes the locked state of the fixing assembly 30 to be released.

Thereafter, when the bicycle 90 is lifted up, each returning unit 50 returns the fixing assembly 30 to its original position via the elastic force. This causes the first and second position-fixing portions 33 to be withdrawn out of the space defined between the spokes of the wheel.

Thus, the user may take away the bicycle 90 from the bicycle holding apparatus 1 according to the present disclosure.

In this connection, upon determination that the newly inputted password does not match the password previously inputted to the locking assembly 40 in order to enable the bicycle 90 to be fixed to the lower bicycle-support frame 21 or the upper bicycle-support frame 22, the control unit may be configured to enable a buzzer or sound output unit to notify the mismatch or to output an alarm sound.

In addition, when the mismatch is done three times or more, the control unit may be configured to stop the operation of the locking assembly 40.

When the operation of the locking assembly 40 is stopped, the user touches a key (not shown) on an initialization unit 44 formed below the number button 43 of the locking assembly 40. In a response thereto, the control unit may be configured to initialize the password previously inputted to the locking assembly 40 in order to enable the bicycle 90 to be fixed to the lower bicycle-support frame 21 or the upper bicycle-support frame 22. In this way, the control unit enables the locking insert 45 to be removed from the first and second through-holes formed in the first and second insert-receiving portions 321 and to be introduced into the housing 42. This causes the locked state of the fixing assembly 30 to be released.

In one embodiment, a bicycle holding apparatus may comprise a main support 10 supported on a ground and having a predetermined height; a bicycle-support frame 20 having one end supported on the main support 10 and the other end supported on the ground, wherein the bicycle-support frame 20 has an elongate slot defined therein to receive a front wheel 91 and a rear wheel 92 of the bicycle 90; and the locking device as defined above, wherein the locking device is disposed on the bicycle-support frame 20, wherein the object is the rear or front wheel 91 or 92 of the bicycle 90, wherein the locking device is configured to fix and lock the front or rear wheel 91 or 92 to the bicycle-support frame 20.

In one embodiment, the bicycle holding apparatus may further comprise a rail 60 supported on an upper portion of the main support 10; and a pivoting-guide unit 70 configured to slide on the rail 60.

In one embodiment, the bicycle-support frame 20 includes a lower bicycle-support frame 21 supported on a lower portion of the main support, and an upper bicycle-support frame 22 supported on the upper portion of the main support via the rail. The upper bicycle-support frame is slidably received in the rail. The pivoting-guide unit 70 is pivotally coupled to the upper bicycle-support frame 22.

The pivoting-guide unit 70 has spaced-apart first vertical plates, wherein each first vertical plate has a curve-shaped pivoting-guide hole 71. The upper bicycle-support frame 22 has spaced-apart second vertical plates, wherein each of the second vertical plates has a pivoting-guide protrusion 2221 on an outer face thereof. Each pivoting-guide protrusion 2221 moves in and along each curve-shaped pivoting-guide hole 71 to guide the pivoting movement of the upper bicycle-support frame 22.

That is, the bicycle holding apparatus includes the main support 10, the bicycle-support frame 20, and the locking device. When the user pulls or pushes the upper bicycle-support frame 22, the pivoting-guide unit 70 slides at the same time. At this time, due to the engagement between each pivoting-guide protrusion 2221 and each pivoting-guide hole 71, the upper bicycle-support frame 22 may be easily pivoted up and down without being removed from the rail 60. This allows easy storage of the bicycle or easy withdrawal of the stored bicycle into or from the bicycle holding apparatus.

The locking device provided in the bicycle holding apparatus is similar to the locking device described with reference to FIGS. 1 to 3 in terms of an operation thereof. Therefore, detailed descriptions of the operation thereof is omitted.

Although the preferred embodiments of the present disclosure have been described in detail above, the scope of the present disclosure is not limited thereto. Instead, the scope of the present disclosure is defined in the following claims. Using the basic concepts of the present disclosure, those skilled in the art will be able to implement various modifications and improvements, and such modifications and improvements are included within the scope of the present disclosure.

### Reference numerals

10 : main support
11 : lower horizontal main frame
12 : first and second vertical main frames
13 : upper horizontal main frame
20 : bicycle-support frame
21 : lower bicycle-support frame
211, 221, 61 : bottom plate
212, 222, 62 : vertical side plates
213, 223 : bicycle-stopping unit
224 : handle
2221 : pivoting-guide protrusion
22 : upper bicycle-support frame
30 : fixing assembly
32 : pivoting-driving portion
321 : first and second insert-receiving portions
322 : first and second through-holes
33 : first and second position-fixing portions
40 : locking assembly
41 : bracket
42 : housing
421 : locking insert passing-hole
43 : number buttons
44 : initialization unit
45 : the locking insert
50 : returning unit
60 : rail
70 : pivoting-guide unit
71 : pivoting-guide hole
80 : shock absorber
81 : rod
90 : bicycle
91 : front wheel
911, 921: spokes
92 : rear wheel

## Claims

1. A locking device configured to fix and lock an object having an empty space defined therein, wherein the device comprises:
a fixing assembly (30) configured to pivot via a load of an object to fix the object; and
a locking assembly (40) configured to control a locked or unlocked state of the fixing assembly (30) via a user input operation, wherein the locking assembly (40) includes a locking insert (45),
wherein the fixing assembly (30) comprises:
first and second spaced-apart brackets (41);
first and second pivoting portions (31) pivotally coupled to the first and second brackets (41) respectively;
first and second pivoting-driving portions (32) integrally formed to lower ends of the first and second pivoting portions (31) respectively, wherein when the first and second pivoting-driving portions (32) are pivoted downwardly via a load of the object, the first and second pivoting portions (31) are pivotally moved such that upper ends thereof are closer to each other, wherein the first and second pivoting-driving portions (32) have first and second insert-receiving portions (321) integrally formed to the first and second pivoting-driving portions (32) respectively at lower ends thereof, wherein the first and second insert-receiving portions (321) have first and second through-holes (322) defined therein respectively, wherein when the first and second pivoting-driving portions (32) are fully pivoted downwardly, the locking insert (45) horizontally passes through the first and second through-holes (322); and
first and second position-fixing portions (33) extending inwardly from the upper ends of the first and second pivoting portions (31) respectively, wherein when the first and second pivoting portions (31) are fully pivotally moved such that upper ends thereof are fully close to each other, the first and second position-fixing portions (33) are inserted into the empty spaced defined in the object, thereby to fix a position of the object,
wherein when the locking insert (45) horizontally passes through the first and second through-holes (322), the fixing assembly (30) is in a locked state.

2. A bicycle holding apparatus comprising:
a main support (10) supported on a ground and having a predetermined height;
a bicycle-support frame (20) having one end supported on the main support (10) and the other end supported on the ground, wherein the bicycle-support frame (20) has an elongate slot defined therein to receive a front wheel (91) and a rear wheel (92) of the bicycle; and
the locking device of claim 1, wherein the locking device is disposed on the bicycle-support frame (20), wherein the object is the rear wheel (92) of the bicycle, wherein the locking device is configured to fix and lock the rear wheel (92) to the bicycle-support frame (20).

3. The bicycle holding apparatus of claim 2, wherein the first and second pivoting portions (31) are pivotably mounted on both sides of the bicycle-support frame (20) respectively,
wherein when the rear wheel (92) is seated on the first and second pivoting-driving portions (32) located in the slot defined in the bicycle-support frame (20), each of the first and second pivoting-driving portions (32) is pivotally and downwardly moved out of the slot through a cut portion defined in a bottom plate of the bicycle-support frame (20) via a weight of the rear wheel (92), thereby to enable the upper ends of the first and second pivoting portions (31) to be fully close to each other,
wherein when the upper ends of the first and second pivoting portions (31) are fully close to each other, the first and second position-fixing portions (33) are inserted into an empty spaced defined between spokes of the rear wheel (92), thereby to fix the rear wheel (92) to the bicycle-support frame (20),
wherein when the first and second insert-receiving portions (321) are pivotally and downwardly moved out of the slot through the cut portion defined in the bottom plate of the bicycle-support frame (20), the locking insert (45) horizontally passes through the first and second through-holes (322) defined in the first and second insert-receiving portions (321) respectively, thereby to enable the fixing assembly (30) to be in a locked state.

4. The bicycle holding apparatus of claim 2, wherein the locking device further comprises first and second returning units (50), wherein each of the first and second returning units (50) is disposed between each of the first and second pivoting portions (31) and the bicycle-support frame (20), wherein each of the first and second returning units (50) has one end supported on each of the first and second pivoting portions (31) and the other end supported on the bicycle-support frame (20), wherein the rear wheel (92) is removed from the first and second pivoting-driving portions (32), each of the first and second returning units (50) enables the fixing assembly (30) to return to its original position via elasticity of each returning unit, thereby causing the first and second position-fixing portions (33) to be separated from the space defined between the spokes of the wheel.

5. The bicycle holding apparatus of claim 2, further comprising:
a rail (60) supported on an upper portion of the main support (10); and
a pivoting-guide unit (70) configured to slide on the rail (60),
wherein the bicycle-support frame (20) includes a lower bicycle-support frame (21) supported on a lower portion of the main support (10), and an upper bicycle-support frame (22) supported on the upper portion of the main support (10) via the rail (60),
wherein the upper bicycle-support frame (22) is slidably received in the rail (60),
wherein the pivoting-guide unit (70) is pivotally coupled to the upper bicycle-support frame (22),
wherein the pivoting-guide unit (70) has spaced-apart first vertical plates, wherein each first vertical plate has a curve-shaped pivoting-guide hole,
wherein the upper bicycle-support frame (22) has spaced-apart second vertical plates, wherein each of the second vertical plates has a pivoting-guide protrusion (2221) on an outer face thereof, wherein each pivoting-guide protrusion (2221) moves in and along each curve-shaped pivoting-guide hole (71) to guide the pivoting movement of the upper bicycle-support frame (22).

## Patentansprüche

1. Absperrvorrichtung, die dazu ausgelegt ist, einen Gegenstand zu fixieren und abzusperren, in dem ein leerer Raum ausgebildet ist, wobei die Vorrichtung umfasst:
eine Fixieranordnung (30), die dazu ausgelegt ist, über eine Last eines Gegenstands zu schwenken, um den Gegenstand zu fixieren; und
eine Absperranordnung (40), die dazu ausgelegt ist, einen abgesperrten oder entsperrten Zustand der Fixieranordnung (30) über einen Benutzereingabevorgang zu steuern, wobei die Absperranordnung (40) einen Absperreinsatz (45) umfasst,
wobei die Fixieranordnung (30) umfasst:
eine erste und eine zweite voneinander beabstandete Halterung (41);
einen ersten und einen zweiten Schwenkabschnitt (31), die jeweils mit der ersten und der zweiten Halterung (41) schwenkbar gekoppelt sind;
einen ersten und einen zweiten Schwenk-Antriebsabschnitt (32), die jeweils an dem unteren Ende des ersten und des zweiten Schwenkabschnitts (31) integral ausgebildet sind, wobei, wenn der erste und der zweite Schwenk-Antriebsabschnitt (32) über eine Last des Gegenstands nach unten geschwenkt werden, der erste und der zweite Schwenkabschnitt (31) derart schwenkend bewegt werden, dass ihre oberen Enden näher zueinander sind, wobei der erste und der zweite Schwenk-Antriebsabschnitt (32) einen ersten und einen zweiten Einsatzaufnahmeabschnitt (321) aufweisen, der jeweils an ihrem unteren Ende integral mit dem ersten und dem zweiten Schwenk-Antriebsabschnitt (32) ausgebildet ist, wobei der erste und der zweite Einsatzaufnahmeabschnitt (321) erste und zweite Durchgangslöcher (322) haben, die jeweils darin ausgebildet sind, wobei wenn der erste und der zweite Schwenk-Antriebsabschnitt (32) voll nach unten geschwenkt sind, der Absperreinsatz (45) horizontal durch das erste und das zweite Durchgangsloch (322) verläuft; und
einen ersten und einen zweiten Positionsfixierungsabschnitt (33), die sich jeweils nach innen von den oberen Enden des ersten und des zweiten Schwenkabschnitts (31) erstrecken, wobei, wenn der erste und der zweite Schwenkabschnitt (31) vollständig schwenkend bewegt werden, so dass ihre oberen Enden vollständig nah zueinander sind, der erste und der zweite Positionsfixierungsabschnitt (33) in den in dem Gegenstand ausgebildeten leeren Raum eingeführt werden, wodurch eine Position des Gegenstands fixiert wird,
wobei sich, wenn der Absperreinsatz (45) horizontal durch das erste und das zweite Durchgangsloch (322) verläuft, die Fixierungsanordnung (30) in einem abgesperrten Zustand befindet.

2. Fahrradhaltevorrichtung umfassend:
einen Hauptträger (10), der auf einem Boden gelagert ist und eine vorbestimmte Höhe hat;
einen Fahrrad-Halterahmen (20), dessen eines Ende auf dem Hauptträger (10) und dessen anderes Ende auf dem Boden gelagert ist, wobei in dem Fahrradträgerrahmen (20) ein länglicher Schlitz zur Aufnahme eines Vorderrads (91) und eines Hinterrads (92) des Fahrrads ausgebildet ist; und
die Absperrvorrichtung nach Anspruch 1, wobei die Absperrvorrichtung auf dem Fahrrad-Halterahmen (20) angeordnet ist, wobei der Gegenstand das Hinterrad (92) des Fahrrads ist, wobei die Absperrvorrichtung dazu ausgelegt ist, das Hinterrad (92) an dem Fahrrad-Halterahmen (20) zu fixieren und abzusperren.

3. Fahrradhaltevorrichtung nach Anspruch 2, wobei der erste und der zweite Schwenkabschnitt (31) jeweils auf beiden Seiten des Fahrrad-Halterahmens (20) schwenkbar angebracht ist,
wobei, wenn das Hinterrad (92) auf dem ersten und dem zweiten Schwenk-Antriebsabschnitt (32) gelagert ist, die in dem in dem Fahrrad-Halterahmen (20) ausgebildeten Schlitz angeordnet sind, jeder von dem ersten und dem zweiten Schwenk-Antriebsabschnitt (32) durch einen in einer Bodenplatte des Fahrrad-Halterahmens (20) ausgebildeten ausgeschnittenen Abschnitt über das Gewicht des Hinterrads (92) schwenkend und nach unten aus dem Schlitz herausbewegt wird, wodurch die oberen Enden des ersten und des zweiten Schwenkabschnitts (31) vollständig nah zueinander sein können,
wobei, wenn die oberen Enden des ersten und des zweiten Schwenkabschnitts (31) vollständig nah zueinander sind, der erste und der zweite Positionsfixierungsabschnitt (33) in einen zwischen den Speichen des Hinterrads (92) ausgebildeten freien Raum eingeführt werden, um dadurch das Hinterrad (92) an dem Fahrrad-Halterahmen (20) zu fixieren,
wobei, wenn der erste und der zweite Einsatzaufnahmeabschnitt (321) durch den in der Bodenplatte des Fahrrad-Halterahmens (20) ausgebildeten ausgeschnittenen Abschnitt schwenkend und nach unten aus dem Schlitz herausbewegt werden, der Absperreinsatz (45) horizontal durch das jeweils in dem ersten und zweiten Einsatzaufnahmeabschnitt (321) ausgebildete erste und zweite Durchgangsloch (322) verläuft, um es dadurch der Fixieranordnung (30) zu ermöglichen, in einem abgesperrten Zustand zu sein.

4. Fahrradhaltevorrichtung nach Anspruch 2, wobei die Absperrvorrichtung ferner eine erste und eine zweite Rückholeinheit (50) aufweist, wobei jede von der ersten und zweiten Rückholeinheit (50) zwischen jedem von dem ersten und zweiten Schwenkabschnitt (31) und dem Fahrrad-Halterahmen (20) angeordnet ist, wobei jede von der ersten und zweiten Rückholeinheit (50) ein Ende hat, das auf jedem von dem ersten und zweiten Schwenkabschnitt (31) gelagert ist und das andere Ende auf dem Fahrrad-Halterahmen (20) gelagert ist, wobei das Hinterrad (92) von dem ersten und zweiten Schwenk-Antriebsabschnitt (32) entfernt ist, wobei jede der ersten und zweiten Rückholeinheit (50) es der Fixierungsanordnung (30) erlaubt, durch die Elastizität jeder Rückholeinheit in ihre Ausgangsposition zurückzukehren, wodurch bewirkt wird, dass der erste und der zweite Positionsfixierungsabschnitt (33) von dem zwischen den Speichen des Rades ausgebildeten Raum getrennt werden.

5. Fahrradhaltevorrichtung nach Anspruch 2, ferner umfassend:
eine Schiene (60), die auf einem oberen Abschnitt des Hauptträgers (10) gehalten ist; und
eine Schwenkführungseinheit (70), die dazu ausgelegt ist, auf der Schiene (60) zu gleiten,
wobei der Fahrrad-Halterahmen (20) einen unteren Fahrrad-Halterahmen (21), der auf einem unteren Abschnitt des Hauptträgers (10) gelagert ist, und einen oberen Fahrrad-Halterahmen (22) aufweist, der über die Schiene (60) auf dem oberen Abschnitt des Hauptträgers (10) gelagert ist,
wobei der obere Fahrrad-Halterahmen (22) in der Schiene (60) gleitend aufgenommen ist,
wobei die Schwenkführungseinheit (70) mit dem oberen Fahrrad-Halterahmen (22) schwenkbar gekoppelt ist,
wobei die Schwenkführungseinheit (70) voneinander beabstandete erste vertikale Platten hat, wobei jede erste vertikale Platte ein gekrümmt ausgebildetes Schwenkführungsloch hat,
wobei der obere Fahrrad-Halterahmen (22) voneinander beabstandete zweite vertikale Platten hat, wobei jede der zweiten vertikalen Platten auf ihrer Außenfläche einen Schwenkführungsvorsprung (2221) hat, wobei sich jeder Schwenkführungsvorsprung (2221) in und längs jedes Schwenkführungslochs (71) bewegt, um die Schwenkbewegung des oberen Fahrrad-Halterahmens (22) zu führen.

## Revendications

1. Dispositif de verrouillage configuré pour fixer et verrouiller un objet présentant un espace vide défini à l'intérieur de celui-ci, dans lequel le dispositif comprend :
un ensemble de fixation (30) configuré pour pivoter par le biais d'une charge d'un objet afin de fixer l'objet, et
un ensemble de verrouillage (40) configuré pour commander un état verrouillé ou déverrouillé de l'ensemble de fixation (30) par le biais d'une opération d'entrée d'un utilisateur, dans lequel l'ensemble de verrouillage (40) comporte une pièce d'insertion de verrouillage (45),
dans lequel l'ensemble de fixation (30) comprend :
des premier et second tasseaux espacés (41),
des première et seconde portions de pivotement (31) couplées de manière pivotante aux premier et second tasseaux (41) respectivement,
des première et seconde portions d'entraînement au pivotement (32) formées d'un seul tenant sur les extrémités inférieures des première et seconde portions de pivotement (31) respectivement, où lorsque les première et seconde portions d'entraînement au pivotement (32) sont pivotées vers le bas par le biais d'une charge de l'objet, les première et seconde portions de pivotement (31) sont déplacées de manière pivotante de telle sorte que les extrémités supérieures de celles-ci se rapprochent l'une de l'autre, où les première et seconde portions d'entraînement au pivotement (32) présentent des première et seconde portions de réception de pièce d'insertion (321) formées d'un seul tenant sur les première et seconde portions d'entraînement au pivotement (32) respectivement au niveau de leurs extrémités inférieures, où les première et seconde portions de réception de pièce d'insertion (321) présentent des premier et second orifices traversants (322) définis à l'intérieur de celles-ci respectivement, où lorsque les première et seconde portions d'entraînement au pivotement (32) sont entièrement pivotées vers le bas, la pièce d'insertion de verrouillage (45) passe horizontalement à travers les premier et second orifices traversants (322), et
des première et seconde portions de fixation en position (33) s'étendant vers l'intérieur depuis les extrémités supérieures des première et seconde portions de pivotement (31) respectivement, où lorsque les première et seconde portions de pivotement (31) sont entièrement déplacées de manière pivotante de telle sorte que leurs extrémités supérieures sont complètement proches l'une de l'autre, les première et seconde portions de fixation en position (33) sont insérées dans l'espace vide défini dans l'objet, pour ainsi fixer une position de l'objet,
dans lequel lorsque la pièce d'insertion de verrouillage (45) passe horizontalement à travers les premier et second orifices traversants (322), l'ensemble de fixation (30) est dans un état verrouillé.

2. Dispositif de stockage de bicyclette, comprenant :
un support principal (10) supporté sur un sol et présentant une hauteur prédéterminée,
un cadre de support de bicyclette (20) présentant une extrémité supportée sur le support principal (10) et l'autre extrémité supportée sur le sol, où le cadre de support de bicyclette (20) présente une fente allongée définie à l'intérieur de celui-ci pour recevoir une roue avant (91) et une roue arrière (92) de la bicyclette, et
le dispositif de verrouillage selon la revendication 1, dans lequel le dispositif de verrouillage est disposé sur le cadre de support de bicyclette (20), où l'objet est la roue arrière (92) de la bicyclette, où le dispositif de verrouillage est configuré pour fixer et verrouiller la roue arrière (92) au cadre de support de bicyclette (20).

3. Dispositif de stockage de bicyclette selon la revendication 2, dans lequel les première et seconde portions de pivotement (31) sont montées de manière pivotante des deux côtés du cadre de support de bicyclette (20) respectivement,
dans lequel lorsque la roue arrière (92) est posée sur les première et seconde portions d'entraînement au pivotement (32) situées dans la fente définie dans le cadre de support de bicyclette (20), chacune des première et seconde portions d'entraînement au pivotement (32) est déplacée en dehors de la fente de manière pivotante et vers le bas à travers une portion découpée dans une plaque inférieure du cadre de support de bicyclette (20) par le biais d'un poids de la roue arrière (92), pour ainsi permettre aux extrémités supérieures des première et seconde portions de pivotement (31) d'être entièrement proches l'une de l'autre,
dans lequel lorsque les extrémités supérieures des première et seconde portions de pivotement (31) sont entièrement proches l'une de l'autre, les première et seconde portions de fixation en position (33) sont insérées dans un espace vide défini entre des rayons de la roue arrière (92), pour ainsi fixer la roue arrière (92) au cadre de support de bicyclette (20),
dans lequel lorsque les première et seconde portions de réception de pièce d'insertion (321) sont déplacées en dehors de la fente de manière pivotante et vers le bas à travers la portion découpée définie dans la plaque inférieure du cadre de support de bicyclette (20), la pièce d'insertion de verrouillage (45) passe horizontalement à travers les premier et second orifices traversants (322) définis dans les première et seconde portions de réception de pièce d'insertion (321) respectivement, pour ainsi permettre à l'ensemble de fixation (30) d'être dans un état verrouillé.

4. Dispositif de stockage de bicyclette selon la revendication 2, dans lequel le dispositif de verrouillage comprend en outre des première et seconde unités de retour (50), où chacune des première et seconde unités de retour (50) est disposée entre chacune des première et seconde portions de pivotement (31) et le cadre de support de bicyclette (20), où chacune des première et seconde unités de retour (50) présente une extrémité supportée sur chacune des première et seconde portions de pivotement (31) et l'autre extrémité supportée sur le cadre de support de bicyclette (20), où la roue arrière (92) est enlevée des première et seconde portions d'entraînement au pivotement (32), chacune des première et seconde unités de retour (50) permet à l'ensemble de fixation (30) de retourner dans sa position originale par élasticité de chaque unité de retour, amenant ainsi les première et seconde portions de fixation en position (33) à se séparer de l'espace défini entre les rayons de la roue.

5. Dispositif de stockage de bicyclette selon la revendication 2, comprenant en outre :
un rail (60) supporté sur une portion supérieure du support principal (10), et
une unité de guidage de pivotement (70) configurée pour coulisser sur le rail (60),
dans lequel le cadre de support de bicyclette (20) comporte un cadre de support de bicyclette inférieur (21) supporté sur une portion inférieure du support principal (10), et un cadre de support de bicyclette supérieur (22) supporté sur la portion supérieure du support principal (10) par le biais du rail (60),
dans lequel le cadre de support de bicyclette supérieur (22) est reçu de manière coulissante dans le rail (60),
dans lequel l'unité de guidage de pivotement (70) est couplée de manière pivotante au cadre de support de bicyclette supérieur (22),
dans lequel l'unité de guidage de pivotement (70) présente des premières plaques verticales espacées, où chaque première plaque verticale présente un orifice de guidage de pivotement en forme de courbe,
dans lequel le cadre de support de bicyclette supérieur (22) présente des secondes plaques verticales espacées, où chacune des secondes plaques verticales présente une saillie de guidage de pivotement (2221) sur une face extérieure de celles-ci, où chaque saillie de guidage de pivotement (2221) se déplace dans et le long de chaque orifice de guidage de pivotement en forme de courbe (71) afin de guider le mouvement de pivotement du cadre de support de bicyclette supérieur (22).
